# EUROPÄISCHE PATENTANMELDUNG

(11) **EP 1 847 829 A1**
(43) Veröffentlichungstag der Anmeldung: **24.10.2007**
(21) Anmeldenummer: 07007762.3
(22) Anmeldetag: 17.04.2007
(51) Int. Cl.: G01N 27/87

(54) **Vorrichtung zum Erkennen von Defekten an Metallteilen**

(30) Priorität: 21.04.2006 DE 102006019128
(71) Anmelder: Prüftechnik Dieter Busch AG, 85737 Ismaning (DE)
(72) Erfinder: Zimmermann, Bernd, 79241 Ihringen (DE)

(57) **Zusammenfassung**

Das Streuflußmeßgerät zur Detektion von oberflächennahen und oberflächenfernen Defekten an ferromagetischen Prüflingen (10) zeichnet sich aus durch mindestens eine flachliegende Spule (20) oder eine äquivalent wirkende Kern-/Spulenkombination (24, 22) sowie mindestens eine aufrecht stehende Spule (30, 40) oder eine äquivalent wirkende Kern-/Spulenkombination (34, 32; 44,42).

## Beschreibung

Die vorliegende Erfindung betrifft eine Vorrichtung und zugehörige Verfahren zum Erkennen von Defekten an Metallteilen und zur quantitativen Beurteilung solcher Defekte. Die Erfindung betrifft insbesondere eine neuartige Vorrichtung zum Erkennen solcher Defekte mittels nichtdestruktiver Techniken auf elektromagnetischer Basis. Speziell betrifft die Erfindung eine Vorrichtung zum Erkennen der genannten Defekte mittels sogenannter Streuflußmessungen.

Die bekannten Test- und Meßvorrichtungen zum Erkennen von Defekten an metallischem Rohmaterial und Halbzeug auf Basis von Strueflußmessungen sehen gewöhnlich vor, den zu testenden Prüfling, der zumeist ferromagnetisch ist, einem relativ starken magnetischen Gleich- oder Wechselfeld auszusetzen. Bei Abwesenheit von Defekten wird ein solches Feld einigermaßen gleichmäßig durch den Prüfling geleitet, der magnetische Fluß ist räumlich weitgehend homogen. Bei Anwesenheit eines Defektes in Form eines Risses, Spaltes o.dgl. werden Feldanteile im Umfeld des Defektes aus dem Metall herausgedrängt, was zu Inhomogenitäten der Feldverteilung führt. Die herausgedrängten Feldanteile können mit geeigneten magnetisch empfindlichen Sonden, z.B. Spulen, Hall-Sonden o.ä. als solche erkannt werden und weisen dann typischerweise auf einen vorliegenden Defekt hin.

Wiewohl das genannte Verfahren der Streuflußmessung weite Verbreitung im Bereich des nichtdestruktiven Testens (NDT) gefunden hat, haftet ihm jedoch der Mangel an, daß es oberflächen- und sondennahe Defekte besser zu diskriminieren gestattet, als solche, die unterhalb der Materialoberfläche des Prüflings verborgen sind. Die letztgenannten Defekte verursachen zwar ebenfalls eine Feldverdrängung und können im Prinzip mit herkömmlichen Sonden beobachtet werden, erzeugen aber nur Signale geringer Amplitude, welche sich häufig im Bereich eines niederfrequenten Störpegels befinden.

Es ist Aufgabe der Erfindung, das genannte Problem zu lösen und eine Vorrichtung und ein Verfahren bereitzustellen, mit dem unterhalb der Materialoberfläche des Prüflings verborgene Fehler besser mittels Streufluß-Beobachtung sensiert werden können, ohne daß die Empfindlichkeit des Gerätes für oberflächennahe Fehler reduziert wird.

Die Aufgabe wird gemäß der vorliegenden Erfindung dadurch gelöst, daß eine Kombination aus mindestens einer flach liegenden Spule oder Sonde und mindestens einer senkrecht dazu orientierten Spule oder Sonde als Sensor-Vorrichtung vorgesehen ist. Das heißt, dass zum Erkennen von Streuflußanteilen die flachliegende Spule eine Flächennormale aufweist, welche parallel zur Flächennormale des Prüflings orientiert ist, und die senkrecht dazu orientierte spule eine Flächennormale aufweist, welche tangential zur Oberfläche des Prüflings gerichtet ist und bevorzugt in Richtung der Bewegung des Prüflings weist. Die Erfindung basiert darauf, dass die bekannten Meßverfahren mit flachliegenden Spulen zwar gut geeignet sind, die radial oder normal aus dem Prüfling austretenden magnetischen Feldanteile in Defektnähe zu sensieren, nicht jedoch die eher tangential austretenden magnetischen Feldanteile, welche von verborgenen Defekten herrühren. Eine senkrecht dazu orientierte Spule oder Sonde, deren Normale in Richtung der Verfahrgeschwindigkeit des Prüflings zeigt, ist dazu wesentlich besser geeignet und erzeugt wesentlich höhere Signale, auch wenn diese niederfrequenter sind als die bei Anwesenheit von Defekten von der flachliegenden Spule registrierten Signale.

Die Erfindung wird im folgenden anhand der Zeichnung erläutert.

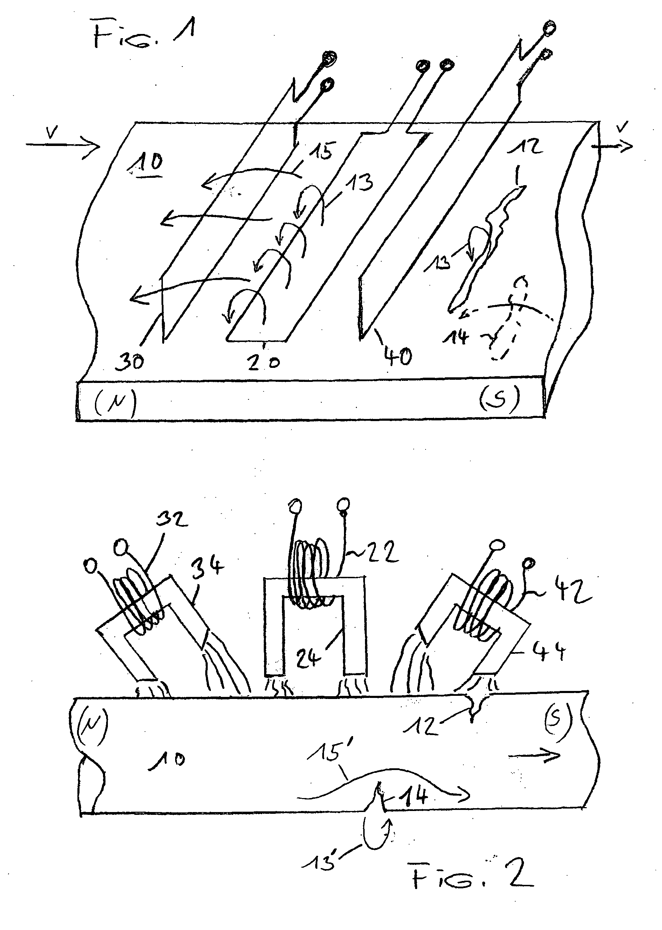

Fig. 1 zeigt in schematischer Weise einen ferromagnetischen Prüfling 10 und dessen Bewegungsrichtung (siehe eingezeichnete Pfeile "v"). Der Prüfling werde der Länge nach durch ein Gleichfeld durchdrungen, wie dies durch die Buchstaben N und S symbolisiert ist; die Polarität des Feldes ist zumeist jedoch unwesentlich. Ein oberflächennaher Defekt 12 verursacht verdrängte Feldlinien 13 mit relativ steilen Austrittswinkeln. Ein verborgener, unterhalb der Oberfläche liegender Defekt verursacht verdrängte Feldlinien 15 mit relativ flachen Austrittswinkeln. Feldlinien 13 sind geeignet, ein detektierbares Signal in der Spule oder Sonde 20 zu erzeugen. Feldlinien 15 sind geeignet, ein detektierbares Signal in Spule 30 oder in Spule 40 zu erzeugen. Die Spulen oder Sonden 20, 30, 40 sind in Fig. 1 in schematischer Weise als kernlose und einlagige Spulen mit nur einer Windung dargestellt und werden in der Praxis mit zusätzlichen Windungen bereitgestellt.

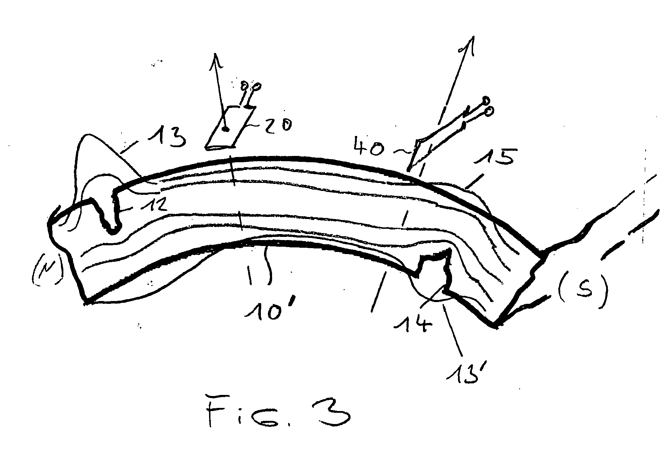

In Fig. 2 wird eine ähnliche Anordnung gezeigt, bei der die Spulen 22, 32 und 34 mit Kernen 24, 34 und 44 versehen sind. Hierbei ist jedoch die Kombination aus Spule 22 und Kern 24 geeignet, ein detektierbares Signal bei Anwesenheit von Feldlinien 15 zu erzeugen, wie sie beispielsweise von einem verborgenen Defekt 14 in gewisser Entfernung hervorgerufen werden. Die weiteren Spulen/Kern-Kombinationen aus Fig. 2 sind vorgesehen, auch und bevorzugt Feldlinien 13 zu detektieren, ggf. unter zeitlicher Speicherung der gesichteten Signale und deren nachträglicher Analyse mittels einer geeigneten Elektronik bzw. einem Computer.

Es versteht sich, daß das von den Spulen 22, 32 und 42 abgegebene Signal einem Verstärker und einer nachfolgenden Signal-Aufbereitungseinheit zugeführt werden sollte, um aussagekräftige Hinweise auf vorliegende Defekte zu erhalten. Desgleichen versteht es sich, daß die Spulen eine geeignete Befestigung relativ zueinander aufweisen müssen und zweckmäßigerweise in einem geeigneten Gehäuse untergebracht sind, welches geeignet zum Prüfling beabstandet ist.

In Fig. 3 wird dargestellt, wie der schematische Verlauf von Feldlinien bei einem rohrförmigen Prüfling aussieht, im Falle einer Streuflußmeßanordnung. Der oberflächennahe Defekt 12 verdrängt die normalerweise annähernd parallel laufenden Feldlinien zu steil austretenden Feldlinien 13, welche geeignet sind, ein detektierbares Signal in Spule 20 zu erzeugen. Der verborgene Defekt 14 verdrängt die normalerweise annähernd parallel laufenden Feldlinien an der radial außen liegenden Oberfläche zu flach austretenden Feldlinien 15, welche nunmehr geeignet sind, ein detektierbares Signal in Spule 40 zu erzeugen.

## Patentansprüche

1. Streuflußmeßgerät zur Detektion von oberflächennahen und oberflächenfernen Defekten an ferromagetischen Prüflingen (10), **gekennzeichnet durch** mindestens eine flachliegende Spule (20) oder eine äquivalent wirkende Kern-/Spulenkombination (24, 22) und mindestens eine aufrecht stehende Spule (30, 40) oder eine äquivalent wirkende Kern-/Spulenkombination (34, 32; 44,42)

2. Kombination von mindestens zwei Spulen gemäß Anspruch 1, wobei die Flächennormalen von flachliegender Spule (20) und Prüfling (10) in angenähert parallele Richtung weisen und die Flächennormale von aufrecht stehender Spule (30, 40) senkrecht dazu und in Richtung der Geschwindigkeit (v) des Prüflings orientiert ist.
